# EUROPÄISCHE PATENTSCHRIFT

(11) **EP 2 288 771 B1**
(45) Veröffentlichungstag und Bekanntmachung des Hinweises auf die Patenterteilung: **09.09.2015**
(21) Anmeldenummer: 09768888.1
(22) Anmeldetag: 28.05.2009
(51) Int. Cl.: E04H 12/08, F03D 1/00, F03D 11/04

(54) **TURM EINER WINDENERGIEANLAGE**
TOWER OF A WIND TURBINE
TOUR D'UNE ÉOLIENNE

(30) Priorität: 24.06.2008 DE 102008029651
(43) Veröffentlichungstag der Anmeldung: 02.03.2011
(73) Patentinhaber: Senvion GmbH, 22297 Hamburg (DE)
(72) Erfinder: TREDE, Alf, 25885 Immenstedt (DE)
(74) Vertreter: Grebner, Christian Georg Rudolf
(86) Internationale Anmeldenummer: PCT/EP2009/003790
(87) Internationale Veröffentlichungsnummer: WO 2009/156039

(56) Entgegenhaltungen:
- WO-A1-2007/082531
- DE-A1- 10 336 998
- DE-C1- 19 733 372
- JP-A- 2002 122 066
- JP-A- 2005 220 715
- US-A1- 2008 041 009

## Beschreibung

Die Erfindung betrifft einen Turm einer Windenergieanlage mit wenigstens einem Wandteil, wobei das eine Wandteil mit einem zweiten angrenzenden Wandteil verbunden ist oder wird oder das eine Wandteil auf einem Grundkörper angeordnet ist oder wird, wobei das Wandteil mit dem Grundkörper verbunden ist oder wird.

Darüber hinaus betrifft die Erfindung ein Verfahren zum Errichten eines Turms einer Windenergieanlage sowie eine Verwendung eines Wandteils zur Ausbildung eines Turms einer Windenergieanlage.

Windenergieanlagen der Patentanmelderin sind unter der Bezeichnung 5M, MM92, MM82, MM70 sowie MD77 bekannt.

Moderne Windenergieanlagen weisen im Allgemeinen einen Turm auf, auf dem ein Maschinengehäuse mit einem Rotor aufgesetzt ist. Der Turm ist insbesondere als Stahlrohrturm ausgebildet und weist im Allgemeinen eine sich verjüngende Form auf.

Der Turm selbst besteht weiterhin aus in der Regel Stahlturmabschnitten, die aus vorgefertigten Mantelsegmenten zusammengesetzt werden.

In WO-A-2004/083633 sind ein Stahlturm einer Windkraftanlage sowie ein Verfahren zum Bauen eines großformatigen, zylindrischen oder konischen Turms einer Windkraftanlage beschrieben.

In US-A-2008/0041009 ist eine Fingerplatteneinheit zum Verbinden benachbarter rohrförmiger Abschnitte eines Turms einer Windenergieanlage offenbart, wobei die Fingerplatteneinheit eine äußere Fingerplatte und eine innere Fingerplatte aufweist.

Darüber hinaus offenbart WO-A-2007/082531 einen Turm einer Windkraftanlage mit mindestens zwei ringförmigen Turmsegmenten, wobei ein erstes Turmsegment das zweite Turmsegment überdeckt. Hierbei werden die ringförmigen Turmsegmente in überlappender oder schuppender Weise übereinander angeordnet und durch Bolzen miteinander verbunden.

Ausgehend von diesem Stand der Technik besteht die Aufgabe der Erfindung darin, einen Turm einer Windenergieanlage bereitzustellen, wobei es möglich sein soll, einzelne, großvolumige Teile des Turms auf einfache Weise zu transportieren und den Turm auf einfache und günstige Weise mit einer hohen Stabilität zu errichten.

Gelöst wird diese Aufgabe durch einen Turm einer Windenergieanlage mit wenigstens einem Wandteil, wobei das eine Wandteil mit einem zweiten angrenzenden Wandteil verbunden ist oder wird oder das eine Wandteil auf einem Grundkörper angeordnet ist oder wird, wobei das Wandteil mit dem Grundkörper verbunden ist oder wird, der dadurch weitergebildet ist, dass bei oder zur Ausbildung des Turms das eine Wandteil stirnseitig oder auf Stoß an das zweite Wandteil angrenzt und/oder angeordnet ist und das eine Wandteil wenigstens eine Querbohrung aufweist, wobei die Querbohrung eine radiale Bohrung ist und die Querbohrung von einem Querbolzen durchsetzt ist oder wird und
das eine Wandteil stirnseitig oder auf Stoß an das zweite Wandteil angrenzt und/oder angeordnet ist und das eine Wandteil mittels eines am Querbolzen angreifenden Spannelements mit dem angrenzenden zweiten Wandteil verspannt ist oder wird
und/oder das eine Wandteil stirnseitig oder auf Stoß an den Grundkörper angrenzt und/oder angeordnet ist und das eine Wandteil mittels eines am Querbolzen angreifenden Spannelements mit dem Grundkörper verspannt ist oder wird.

Die Erfindung beruht auf dem Gedanken, dass bei Errichtung eines Stahlrohrturms einer Windenergieanlage mit einem großen Durchmesser, beispielsweise von 4,3 m und mehr, der Turm aus mehreren sich ergänzenden Wandteilen aus Stahl zusammengebaut wird, wobei die Wandteile insbesondere als teilzylindrische oder teilkonische Turmabschnitte bzw. Turmsegmente ausgebildet sind. Hierbei sind die Wandteile bevorzugt ohne Flansche oder dergleichen ausgebildet, wobei die Wandteile bzw. die Turmsegmente bzw. die Wandteile mit dem Fundamentkörper, auf dem der Turm der Windenergieanlage errichtet werden soll, lösbar verbunden sind. Hierbei weisen die Wandteile entsprechende Querbohrungen bzw. radiale Bohrungen auf, so dass in die Bohrungen Querbolzen eingesetzt werden und die Querbolzen mit Spannelementen bzw. Zugelementen verbunden werden.

Insbesondere sind in die Wandteile des Turms im Bereich der Stirnflächen der Wandteile umlaufend Querbohrungen bzw. Radialbohrungen eingebracht. In diese Querbohrungen werden entsprechende Querbolzen gesteckt, die an den Enden jeweils eine Radialbohrung oder Sacklochbohrung zur Aufnahme eines Spannelements bzw. einer Spannschraube aufweisen. Die Bohrungen des Querbolzens dienen dabei zur Verschraubung des Wandteils mit einem an dem Gegenstück angebrachten Flansch des Grundkörpers bzw. Fundamentkörpers oder eines, insbesondere zweireihigen, Fundamentankerkorbes. Bei der Verbindung von zwei Wandteilen miteinander durchsetzt ein Spannelement oder ein Spanbolzen auf der Innenseite sowie Außenseite des Turms jeweils eine Bohrung des Querbolzens am ersten Wandteil als auch die Bohrung des Querbolzens am zweiten Wandteil.

Durch den Einsatz der Querbolzen und der an dem Querbolzen angreifenden Spannelemente kann eine kraftschlussgerechte, zweireihige Verschraubung eines Turmsegmentes bzw. Mantelteils mit einem weiteren Turmsegment oder eine Verschraubung des Wandteils bzw. Turmsegments mit dem Grundkörper bzw. Fundamentkörper erreicht werden, wobei die Spannelemente bzw. Spannbolzen im Wesentlichen parallel zur Turmwandung bzw. tangential zur Turmwandung verlaufen, so dass das Wandteil mit dem Nachbarwandteil verspannt wird.

Dadurch, dass ein Turmsegment bzw. ein Wandteil auf einfache Weise mit beispielsweise einem T-Flansch eines Grundkörpers verbunden wird, entfällt bei dem erfindungsgemäß hergestellten Wandteil die Ausbildung eines entsprechenden Flansches bzw. Turmfußflansches, um das Wandteil auf dem T-Flansch des Grundkörpers anzuordnen. Dadurch, dass bei den Wandteilen ein entsprechender T-Flansch nicht mehr erforderlich ist bzw. wegfällt, ist es möglich, dass größere Wandteile mit einem größerem Krümmungsradius hergestellt und transportiert werden, so dass durch die Bereitstellung von flanschfreien Wandteiten ein Turmrohraußendurchmesser von 4,3 m und mehr ausgebildet werden kann, wodurch sich hierdurch eine signifikant höhere Biegesteifigkeit des Turms ergibt.

Ein limitierender Faktor bei dem Transport von großvolumigen Bauteilen von Windenergieanlagen besteht insbesondere in dem in zahlreichen Ländern festgesetzten maximalen Transportdurchmesser von 4,3 m von großvolumigen Bauteilen. Bei dem Transport von konventionellen Turmsegmenten oder Turmwandteilen, die mit einem T-Flansch oder dergleichen versehen sind, resultiert ein Rohraußendurchmesser einer Windenergieanlage am Fuß der Anlage von etwa 4 m, da die Wandteile zusätzlich beispielsweise mit einem Turmfußflansch ausgebildet sind und somit der Flansch hauptsächlich die Größe der Wandteile für den Transport begrenzt. Dadurch, dass erfindungsgemäß die Wandteile ohne Flansche, die am Errichtungsort über die Schraubverbindungen miteinander verschraubt werden, ausgebildet bzw. gefertigt sind, kann der Rohraußendurchmesser bei der Windenergieanlage auf 4,3 m entsprechend erhöht werden, da durch die erfindungsgemäßen flanschfreien Wandteile größere Wandteile für den Transport und die Errichtung des Turms zur Verfügung gestellt werden können.

Durch die Vergrößerung des Rohraußendurchmessers des Turms steigt entsprechend das Widerstandsmoment der Turmhülle bei gleicher Wandstärke im Verhältnis zu einer T-Flanschverbindung um 25 % und mehr, so dass hierdurch eine höhere Biegesteifigkeit des Turms in entsprechender Weise erreicht wird.

Zum Transport der erfindungsgemäß größeren, vorzugsweise flanschfreien, Turmsegmente oder Wandteile können je nach Anforderung entsprechende Transportversteifungen für die zu transportierenden Turmteile vorgesehen sein, da die aussteifende Wirkung der üblicherweise vorhandenen Flansche entfällt. Dies gilt insbesondere auch für Schalensegmente. Nach dem Transport werden am Errichtungsort des Windenergieanlagenturms die Versteifungselemente oder dergleichen von den Turmsegmenten entfernt, die dann für weitere Transportfahrten wieder verwendet werden können.

Darüber hinaus ist die Herstellung der flanschfreien Wandteile auch günstiger, da kein aufwendig hergestellter Flansch mit einer entsprechenden Passgenauigkeit für das Wandteil mehr erforderlich ist.

Im Rahmen der Erfindung ist es möglich, dass durch eine hohe (erforderliche) Vorspannung in den Spannelementen bzw. Spannbolzen im Querbolzen und in der Turmwandung dementsprechend örtlich begrenzt sehr hohe Beanspruchungen entstehen. Bevorzugt wird die Vorspannung so hoch gewählt, dass eine lokal plastische Verformung auftritt. Der Querbolzen sowie die Turmwandung im Bereich der Querbohrungen sind dabei vorzugsweise aus Material gefertigt, welches besonders hohen Anforderungen an die Zähigkeitseigenschaften genügt. Durch diese Maßnahmen wird eine besonders hohe Materialausnutzung und eine sehr wirtschaftliche Auslegung erreicht.

Dadurch, dass das eine Wandteil stirnseitig oder auf Stoß an das zweite Wandteil und/oder an den Grundkörper angrenzt und/oder angeordnet ist, ist die erfindungsgemäße Querbolzenverbindung sowohl am Turmfuß als auch bei der Ausbildung von Schalentürmen über entsprechende vertikale und/oder horizontale Verbindungsstöße möglich.

Bei der Verbindung von mehreren Segmenten fallen ebenfalls entsprechend teure und aufwendige Flansche weg, wodurch eine einfache Bearbeitung der Wandteile durch Einbringen von Bohrungen in die Wandteile erreicht wird.

Insbesondere sind mehrere Querbohrungen, vorzugsweise radiale Bohrungen, im Randbereich bzw. an den Stirnseiten des Wandteils ausgebildet, der bzw. die an das zweite Wandteil oder an den Grundkörper angrenzt, wobei vorzugsweise mehrere Querbohrungen in vorbestimmten unterschiedlichen Abständen zum Rand des Wandteils oder zur Stirnseite ausgebildet sind.

Dadurch, dass die vorgesehenen Querbohrungen beispielsweise in zwei verschiedenen Abständen zum Randbereich oder zur Stirnseite des Wandteils ausgebildet sind, ist es möglich, dass entlang des Randbereichs bzw. der Stirnseite zwei Reihen von Querbohrungen ausgebildet sind, wobei vorzugsweise die Querbohrungen der beiden Reihen alternierend zueinander angeordnet sind. Hierdurch ist es möglich, dass mehr Bohrungen in das Wandteil eingebracht werden als bei einer einreihigen Anordnung von Querbohrungen mit einem konstanten Abstand zur Stirnseite bzw. zum Rand.

Vorteilhafterweise sind der oder die Querbolzen für die Querbohrungen senkrecht zur Oberfläche des Wandteils ausgebildet, so dass bei Ausbildung bzw. Errichtung des Turms die angeordneten Querbolzen in radialer Richtung angeordnet sind.

Darüber hinaus zeichnet sich der errichtete bzw. der zu errichtende Turm in einer Weiterbildung dadurch aus, dass die Querbolzen beidseits des Wandteils Bohrungen oder Durchgangslöcher zur Aufnahme von Spannelementen, beispielsweise Spannbolzen oder dergleichen oder Zugelementen, haben.

Außerdem ist es bevorzugt, wenn die in die Querbohrungen eingesetzten Querbolzen im Querschnitt rund oder oval ausgebildet sind. Entsprechend sind die Bohrungen im Wandteil rund oder oval.

Bei der erfindungsgemäßen Verbindung eines Wandteils mit einem zweiten Wandteil und/oder mit einem Grundkörper, z.B ein Fundamenteinbauteil, sind ein Querbolzen und ein Spannelement bzw. ein Spannbolzen miteinander in Wirkverbindung bringbar, wobei das Spannelement eine Längsachse definiert und in einer weiteren Ausgestaltung der Querbolzen in Richtung der Längsachse des Spannelements eine höhere Biegesteifigkeit als quer zur Längsachse aufweist.

Vorzugsweise hat der Querbolzen in Richtung der Längsachse des Spannelements eine größere Ausdehnung als quer zur Richtung der Längsachse des Spannelements. Bevorzugterweise ist der Querbolzen außerdem im Querschnitt elliptisch, oval, teilweise elliptisch oder teilweise oval ausgebildet. Überdies kann der Querbolzen im Querschnitt doppel-T-förmig mit abgerundeten Kanten oder knochenförmig ausgebildet sein.

Zur Verbindung eine Wandteils mit einem weiteren Turmwandteil oder mit einem Grundkörper sind in einer bevorzugten Ausgestaltung am Wandteil die Querbohrungen für die Querbolzen in wenigstens zwei Reihen angeordnet, wobei wenigstens eine erste Reihe näher an dem stirnseitigen Ende bzw. an der Stoßseite des Wandteils als wenigstens eine zweite Reihe angeordnet ist. Vorzugsweise sind die Reihen der Querbohrungen für die Querbolzen um den (Teil-)Umfang oder entlang der Längsachse des Wandteils angeordnet.

Weiterhin ist in einer Ausgestaltung vorgesehen, dass die Wirkverbindung der Spannelemente mit den Querbolzen, die in der zweiten Reihe angeordnet sind, weicher ausgestaltet ist im Vergleich zur Wirkverbindung der Spannelemente mit den Querbolzen, die in der ersten Reihe angeordnet sind.

Überdies sind bei einer zweireihigen oder mehrreihigen Anordnung der Querbolzen am Wandteil die Spannelemente wenigstens teilweise unterschiedlich lang. Insbesondere sind die Spannelemente, die der ersten Reihe zugeordnet sind, kürzer als die Spannelemente, die der zweiten Reihe zugeordnet sind. Weiterhin ist es gemäß einer Weiterbildung vorteilhaft, wenn die Spannelemente wenigstens teilweise unterschiedlich dick sind.

Darüber hinaus zeichnet sich eine Verbindung dadurch aus, dass die Spannelemente, die der ersten Reihe von Querbolzen zugeordnet sind, dicker sind als die Spannelemente, die der zweiten Reihe von Querbolzen zugeordnet sind.

Es ist in einer bevorzugten Ausführungsform vorgesehen, dass der Verbindungsbereich des Wandteils mit dem zweiten Wandteil wenigstens teilweise radial, insbesondere im Wesentlichen horizontal, umlaufend oder wenigstens teilweise vertikal, vorzugsweise im Wesentlichen vertikal, verlaufend ausgebildet ist oder der Verbindungsbereich des Wandteils mit dem Grundkörper wenigstens teilweise radial, vorzugsweise im Wesentlichen horizontal, umlaufend ausgebildet ist. Hierdurch ist es möglich, dass mehrere Wandteile bzw. Turmsegmente zu einem Turmsegmentabschnitt über entsprechende Vertikalverbindungen miteinander verbunden werden. Darüber hinaus werden über entsprechende Horizontalverbindungen mehrere Turmabschnitte bzw. der Turmfußabschnitt mit dem Grundkörper verbunden.

Des Weiteren zeichnet sich der Turm in einer Ausgestaltung dadurch aus, dass zwischen dem Wandteil und dem zweiten Wandteil wenigstens ein Zwischenstück angeordnet ist oder wird, so dass die beiden miteinander zu verbindenden Wandteile unter Zwischenschaltung eines Zwischenstücks miteinander verbunden werden. Hierdurch wird die Montage von zwei Wandteilen bei der Verbindung bzw. bei der Turmerrichtung erleichtert und verbessert.

Hierzu ist weiter vorgesehen, dass das Zwischenstück im Querschnitt L-förmig oder T-förmig oder U-förmig oder S-förmig oder Z-förmig oder Y-förmig oder H-förmig ausgebildet ist.

Überdies wird die Montage bei zwei miteinander zu verbindenden Wandteilen bzw. die Handhabung erleichtert, wenn das Zwischenstück zwischen den beiden Wandteilen an wenigstens einem Wandteil fixiert ist oder wird. Hierbei ist beispielsweise das Zwischenstück mittels Befestigungsschrauben oder Stiften fixiert. Darüber hinaus ist es auch möglich, dass das Zwischenstück an einem Wandteil angeschweißt oder angeklebt ist.

Eine weitere Verbesserung der Montage wird dadurch erreicht, dass das Zwischenstück auf wenigstens einer Seite einen trichterförmigen Öffnungsbereich aufweist. Hierbei ist beispielsweise das Hförmige Zwischenstück mit schräg nach außen verlaufenden bzw. sich öffnenden Schenkeln ausgebildet, so dass bei Anordnung eines zu verbindenden Wandteils mit einem anderen Wandteil durch den trichterförmigen Öffnungsbereich des Zwischenstücks die angrenzenden Stoßseiten bzw. Stirnseiten der Wandteile exakt positioniert und ausgerichtet werden.

Außerdem zeichnet sich der Turm in einer vorteilhaften Ausführungsform dadurch aus, dass das Wandteil oder die Wandteile im Bereich der Querbohrung oder der Bohrungen mit einer Dickung oder einem verstärkten bzw. dickeren Verbindungsblech (oder Fußblech) oder Randblech ausgebildet sind, da im kraftflussübertragenden Verbindungsbereich hierdurch eine dauerhaft stabile Verbindung zwischen den Wandteilen erreicht wird.

Hierbei ist das Wandteil im Bereich der Querbohrungen im Durchmesser dicker ausgebildet als im mittleren Bereich des entsprechenden Wandteils.

Vorteilhafterweise weist der Turm wenigstens einen Rohrturmabschnitt mit wenigstens zwei miteinander verbundenen Wandteilen auf. Bevorzugterweise wird ein Rohrturmabschnitt mit im Wesentlichen kreisförmigem Rohrdurchmesser durch drei miteinander verbundene Wandteile ausgebildet, wobei die Wandteile in diesem Fall als schalenförmige Turmsegmente gleicher Bogenlänge, d.h. jeweils von 120°, ausgebildet sind.

Um einen Turm zu errichten, ist vorteilhafterweise vorgesehen, dass das Wandteil auf einen Flansch, insbesondere einen T-Flansch eines Fundamentkörpers, oder auf einen Ankerkorb, insbesondere eines Fundamentkörpers, aufgesetzt wird oder ist. Hierbei besteht der Fundamentkörper aus Beton, der in ein Fundamentbett im Boden eingebracht ist, wobei im Fundamentkörper auf der Oberseite ein T-Flansch bzw. im Inneren ein entsprechender Ankerkorb für einen Rohrturm vorgesehen ist.

Darüber hinaus wird die Aufgabe gelöst durch ein Verfahren zum Errichten eines Turms einer Windenergieanlage, wobei der Turm, wie voranstehend beschrieben, ausgebildet wird. Hierbei wird der der Turm dadurch ausgebildet wird, dass wenigstens ein Wandteil des Turms mit einem zweiten angrenzenden Wandteil verbunden wird oder das eine Wandteil auf einem Grundkörper angeordnet wird, wobei das Wandteil mit dem Grundkörper verbunden wird, und bei oder zur Ausbildung des Turms das eine Wandteil wenigstens eine Querbohrung aufweist, wobei die Querbohrung eine radiale Bohrung ist und die Querbohrung von einem Querbolzen durchsetzt wird oder ist
und das eine Wandteil stirnseitig oder auf Stoß an das zweite Wandteil angrenzt und/oder angeordnet ist und das eine Wandteil mittels eines am Querbolzen angreifenden Spannelements mit dem angrenzenden zweiten Wandteil verspannt wird
und/oder das eine Wandteil stirnseitig oder auf Stoß an den Grundkörper angrenzt und/oder angeordnet ist und das eine Wandteil mittels eines am Querbolzen angreifenden Spannelements mit dem Grundkörper verspannt wird.

Bevorzugte Weiterbildungen der Errichtung eines Windenergieanlagenturms ergeben sich aus der voranstehenden Beschreibung, auf die zur Vermeidung von Wiederholungen ausdrücklich verwiesen wird.

Insbesondere zeichnet sich das Verfahren dadurch aus, dass bei Verbindung eines Wandteils mit einem zweiten Wandteil oder eines Wandteils mit einem Grundkörper bzw. Fundamentkörper die Spannelemente bzw. Spannbolzen für den oder die Querbolzen beidseits des Wandteils synchronisiert vorgespannt werden. Hierdurch werden das innere und äußere Spannelement eines Querbolzens synchron vorgespannt. Durch die Synchronisierung der Verspännung, d.h. das gleichzeitige Anziehen der Spannelemente bzw. der Spannbolzen an einem Querbolzen wird das Verkanten der Querbolzen in der Turmwandung vermieden. Die Synchronisierung kann beispielsweise durch gleichzeitiges Anziehen der Spannbolzen durch zwei Monteure erfolgen, die sich über eine Sprechverbindung entsprechend verständigen, wobei ein Monteur jeweils auf der Außenseite und auf der Innenseite die Spannbolzen verspannt. In einer Alternative ist es möglich, dass zwei (automatische) Vorspanneinrichtungen, d.h. jeweils eine Vorspanneinrichtung auf der Turmwandinnenseite bzw. auf der Turmwandaußenseite vorgesehen sind, die auf elektrische und/oder hydraulische und/oder pneumatische Weise miteinander, beispielsweise über entsprechende Kabel- bzw. Schlauchverbindungen, synchronisiert sind bzw. werden.

Darüber hinaus erfolgt eine Lösung der Aufgabe durch eine Verwendung eines Wandteils zur Ausbildung eines Turms einer Windenergieanlage, wobei der Turm, wie voranstehend beschrieben, ausgebildet ist oder wird. Zur Vermeidung von Wiederholungen wird auf die obigen Ausführungen ausdrücklich verwiesen, die in entsprechender Weise gelten.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage;
- Fig. 2: eine schematische Querschnittsansicht eines Abschnitts eines Turmfußes einer Windenergieanlage;
- Fig. 3: eine schematische Querschnittsansicht eines Turmfußes gemäß einer weiteren Ausführungsform;
- Fig. 4a, 4b: schematische Seitenansichten auf den Verbindungsbereich eines Wandteils;
- Fig. 5: schematisch einen Querschnitt durch zwei miteinander verbundende Wandteile und
- Fig. 6: schematisch eine Detailansicht eines Verbindungsstücks zwischen zwei Wandteilen im Querschnitt.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

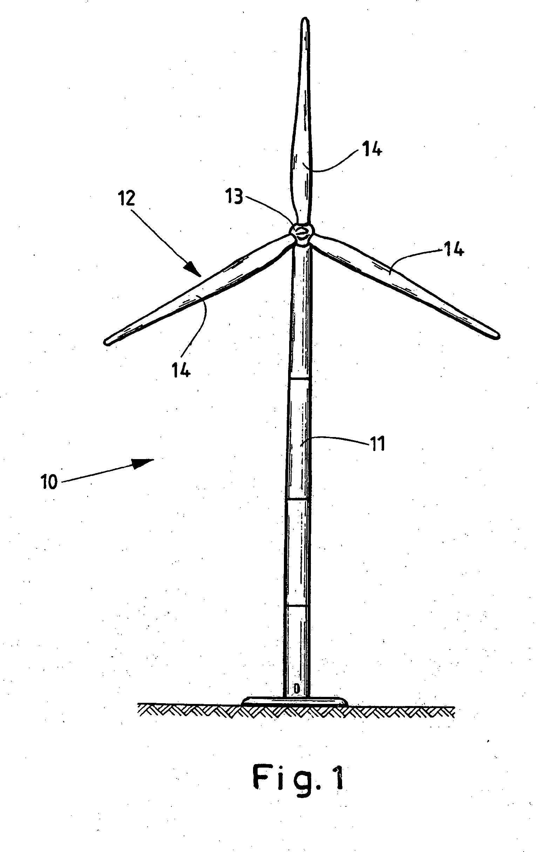

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 13 angebracht sind. Bei Windeinfall dreht der Rotor 12 in an sich bekannter Weise. Hierdurch kann Leistung von einem an den Rotor 12 bzw. an die Rotornabe 13 angeschlossenen Generator erzeugt werden und in ein Verbrauchernetz abgegeben werden.

Der Turm 11 ist hierbei als Stahlrohrturm ausgebildet und besteht aus mehreren, miteinander verbundenen Rohrturmabschnitten. Die Rohrturmabschnitte werden auch als Turmschuss bezeichnet, so dass ein Rohrturm als mehrschüssiger Rohrturm ausgebildet ist. Bei der Errichtung des Rohrturms wird der Turmschuss bzw. Rohrturmabschnitt durch mehrere Turmsegmente bzw. Turmwandteile gebildet, wobei die Turmsegmente bzw. Wandteile bei einer dreiteiligen Ausführung eines Rohrturmabschnittes als 120° Schalensegment ausgebildet sind.

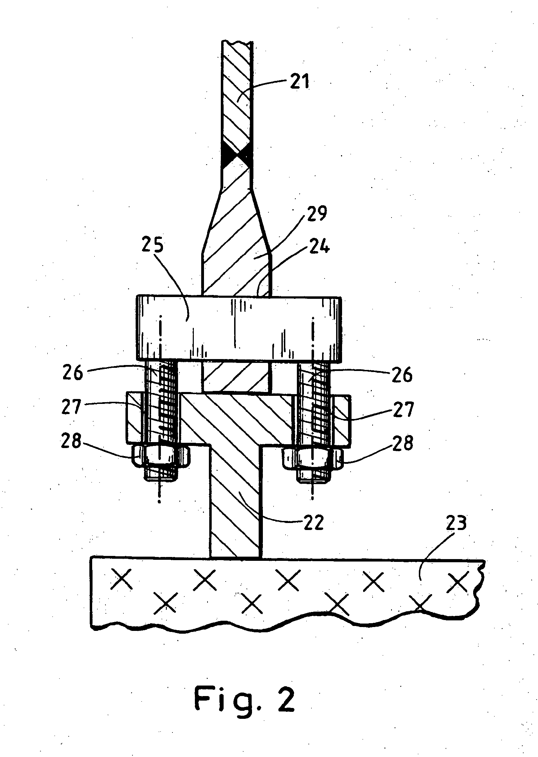

Fig. 2 zeigt in einer Detailansicht die Verbindung eines Turmwandteils 21 mit einem T-Flansch 22 im Querschnitt, der in einem Fundament 23 aus Beton in an sich bekannter Weise eingegossen ist. Das Fundament 23 kann dabei als Fertigbetonfundament oder auch als Ortbeton-Fundament oder Transportbeton-Fundament ausgeführt sein. Das Fundament 23 ist auf einem oder in einem entsprechenden Untergrund bzw. Boden platziert.

Das Turmwandteil 21 ist im unteren Bereich bzw. Randbereich mit einer größeren Dicke ausgebildet als im oberen bzw. mittleren Bereich des Turmwandteils 21. Hierzu weist das Turmwandteil 21 im unteren Bereich ein angeschweißtes, in der Wandstärkte dickeres bzw. größeres Verbindungsblech 29 auf, das im Übergang zum Mantelblech des Turmwandteils 21 geschäftet ist. Hierdurch ergibt sich ein sanfter Dickenübergang zur Turmwandung.

Im unteren verdickt ausgebildeten Verbindungsbereich des Turmwandteils 21 ist eine Bohrung bzw. Querbohrung 24 ausgebildet, in die ein Querbolzen 25 eingesetzt wird. Der Querbolzen 25 verfügt über sogenannte Sackbohrungen zur Aufnahme von Spannschrauben oder Spannbolzen. Bevorzugterweise sind im Querbolzen 25 entsprechende Gewindesacklöcher oder Gewindedurchgangslöcher ausgebildet.

Zur Verbindung des T-Flansches 22 mit dem Turmwandteil 21 durchsetzen, als Gewindebolzen ausgeführte Schraubbolzen 26 die Bohrungen 27 des T-Flansches 22 und die (nicht dargestellten) Sackbohrungen im Querbolzen 25. An der Unterseite der T-Flanken des T-Flansches 22 sind Schraubmuttern 28 auf den Spannbolzen 26 aufgesetzt, so dass durch Andrehen der Schraubenmuttern 28 der T-Flansch 22 und das Turmwandteil 21 miteinander verbunden werden, wobei das Turmwandteil 21 und der T-Flansch 22 durch die am Querbolzen 25 angreifenden Spannschrauben 26 miteinander verspannt werden. Alternativ zu den Schraubbolzen kann die Verbindung auch mit konventionellen Sechskantschrauben erfolgen.

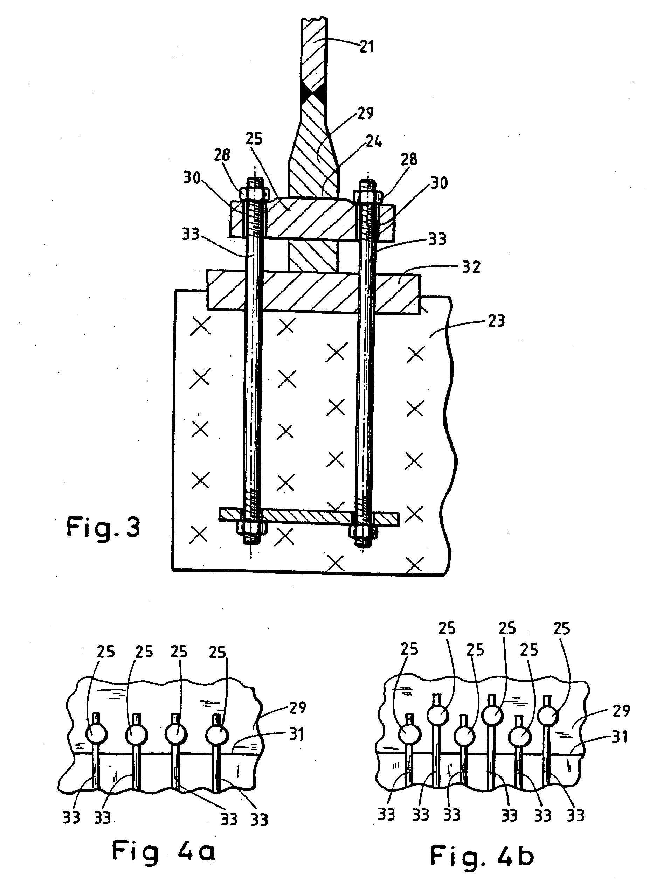

Fig. 3 zeigt schematisch im Querschnitt ein weiteres Ausführungsbeispiel für die Anordnung eines Turmwandteils 21 auf dem aus Beton ausgebildeten Fundament 23. Im unteren Bereich des Turmwandteils 21 ist das mit einer Dickung ausgebildete Verbindungsblech 29 angeschweißt, wobei stirnseitig das Verbindungsblech 29 auf einer Lasteinleitplatte 32 aufsetzt. Die Lasteinleitplatte 32 ist im Fundament 23 eingelassen und wird von Ankerstangen 33 eines im Betonfundament 23 angeordneten Ankerkorbes durchsetzt.

Die Ankerstangen 33 des Ankerkorbs sind im Beton 23 angeordnet und ragen senkrecht durch die Lasteinleitplatte 32 hindurch und ragen durch die Bohrungen 30 des Querbolzens 25 hindurch. Auf der Oberseite des Querbolzens 25, der an seinen beiden Außenseiten abgeflacht ausgebildet ist, sind entsprechende Schraubmuttern 28 auf dem Schraubgewinde der Ankerstangen 33 aufgesetzt. Durch Anziehen der Muttern 28 werden das Turmwandteile 21 und der Ankerkorb bzw. das Fundament 23 miteinander verspannt.

Beispielsweise verfügt eine erfindungsgemäße Turmfußverbindung einer 3,3 Megawatt-Windenergieanlage der Patentanmelderin über die folgende Ausführungsgeometrie bzw. die nachfolgenden Abmessungen: Rohraußendurchmesser 4300 mm, Wandungsdicke (Mantelblech): 35 mm, Verbindungsblechdicke: 80 mm, Höhe des Verbindungsblechs: 250 mm; Schäftung (d.h. Schrägung im Übergang zum Mantelblech) des Verbindungsblechs: 1:4; Querbolzendurchmesser: 100 mm sowie Abstand zwischen Querbohrung und Turmfuß: 100 mm.

Fig. 4a und Fig. 4b zeigen schematisch Seitenansichten auf die in Fig. 3 dargestellte Verbindung des Turmwandteils 21 mit dem Fundament 23. In Fig. 4a sind alle Bohrungen 24, in denen die Querbolzen 25 eingesetzt werden, in der gleichen Höhe, d.h. im selben Abstand zur Stirnseite 31 des Verbindungsblechs 29, ausgebildet.

Bei dem in Fig. 4b dargestellten Ausführungsbeispiel sind die Bohrungen für die Querbolzen 25 in zwei verschiedenen Höhen bzw. in zwei unterschiedlichen Abständen zur Stirnseite alternierend angeordnet, so dass hierdurch eine zweireihige Anordnung von Querbolzen 25 mit unterschiedlichen Abständen zur Stirnseite 31 des Verbindungsblechs 29 ausgebildet werden. Hierdurch ergibt sich eine kompaktere Bauweise, d.h. eine höhere Anzahl an Bohrungen bzw. Querbolzen 25 auf derselben Länge, da aufgrund der versetzten alternierenden Bohrungen die Bohrungen für die Querbolzen 25 dichter beieinander, d.h. mit einem geringeren Abstand zueinander, ausgebildet werden.

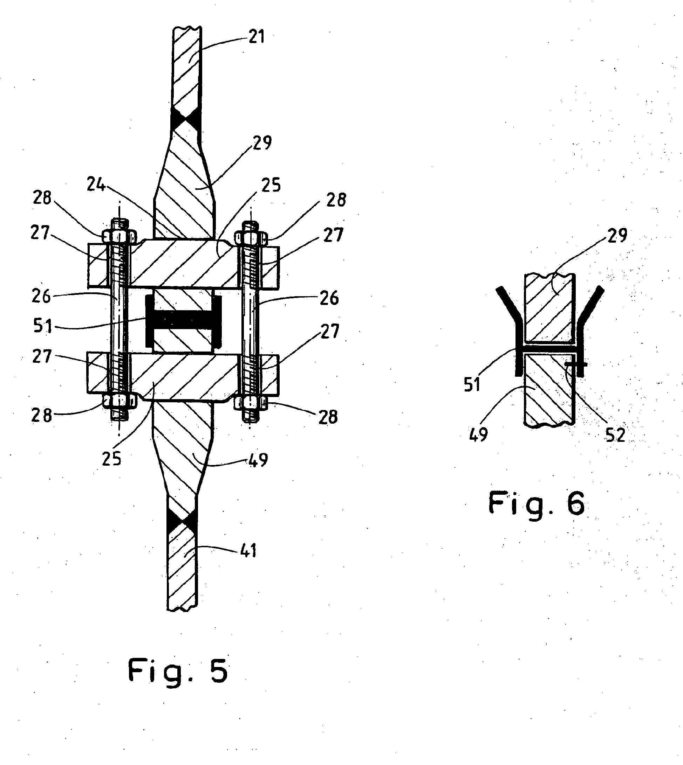

Fig. 5 zeigt nicht maßstäblich im Querschnitt die Verbindungen von den beiden Turmwandteilen 21, 41 miteinander, wobei im Übergangsbereich die Turmwandteile 21, 41 jeweils ein mit einer Verdickung ausgebildetes Verbindungsblech 29, 49 haben. Hierbei sind die Verbindungsbleche 29, 49 mit ihren Stirnseiten zueinander ausgerichtet, wobei zwischen den Stirnseiten der Verbindungsbleche 29, 49 ein H-förmiges Zwischenstück 51 angeordnet ist.

Die Spannbolzen 26 durchdringen die Bohrungen 27 der Querbolzen 25 auf beiden Seiten der Turmwandteile 21 bzw. 41, so dass durch Anziehen der Schraubenmuttern 28 die beiden Wandteile 21 und 41 miteinander verspannt werden. Alternativ kann auch einer der beiden Querbolzen aus Kostengründen mit Sacklochbohrungen, wie in Fig. 2 dargestellt, ausgebildet sein und die Verspannung mit konventionellen Sechskantschrauben erfolgen.

Bei der in Fig. 5 dargestellten Verbindung von zwei Turmsegmenten bzw. zwei Turmwandteilen 21, 41 kann der Verbindungsbereich zwischen den beiden Wandteilen mit den durch Schraubbolzen 26 miteinander verspannten Querbolzen 25 der Wandteile 21, 41 horizontal verlaufend oder vertikal verlaufend ausgebildet sein. Im letzteren Fall ist die Turmwandung dann mit dem Turmradius gekrümmt ausgeführt.

In Fig. 6 ist eine Variante eines H-förmigen Zwischenstücks 51 zwischen den beiden Wandteilen 21, 41 bzw. deren stirnseitigen Verbindungsblechen 29, 49 dargestellt. Hierbei umgeben bzw. überdecken die senkrechten Schenkel des "H"-förmigen Zwischenstücks 51 die beiden Stirnseiten der Verbindungsbleche 29, 49. Auf einer Seite des Flußblechs 49 ist das Zwischenstück 51 an einer Schenkelseite mittels eines Befestigungsstiftes 52 montiert. Darüber hinaus weist das Zwischenstück 51 im oberen bzw. gegenüberliegenden Bereich einen sich erweiternden bzw. trichterförmigen Offnungsbereich auf, wobei die senkrechten Schenkel des "H" seitlich nach außen gerichtet sind. Hierdurch ergibt sich eine Art Einführhilfe bei der Montage der beiden miteinander zu verbindenden Turmwandteile.

Die H-förmigen Zwischenstücke 51 sind bevorzugterweise als Kreisbogensegmente bei horizontal aufeinander stoßenden Wandteilen ausgebildet, wodurch mehrere Wandteile als gebogene Turmschalensegmente zu einem Turmschuss verbunden werden. Die H-förmigen Zwischenstücke 51 sind alternativ auch als gerade Profile bei einem Vertikalstoß der miteinander zu verbindenden Wandteile ausgebildet.

### Bezugszeichenliste

- 10: Windenergieanlage
- 11: Turm
- 12: Rotor
- 13: Rotornabe
- 14: Rotorblatt
- 21: Turmwandteil
- 22: T-Flansch
- 23: Fundament
- 24: Bohrung
- 25: Querbolzen
- 26: Schraubbolzen
- 27: Flanschbohrung
- 28: Schraubenmutter
- 29: Verbindungsblech
- 31: Stirnseite
- 32: Lasteinleitplatte
- 33: Ankerstange
- 41: Turmwandteil
- 49: Verbindungsblech
- 51: Zwischenstück
- 52: Befestigungsstift

## Patentansprüche

1. Turm (11) einer Windenergieanlage mit wenigstens einem Wandteil (21), wobei das eine Wandteil (21) mit einem zweiten angrenzenden Wandteil (41) verbunden ist oder das eine Wandteil (21) auf einem Grundkörper (23) angeordnet ist, wobei das Wandteil (21) mit dem Grundkörper (23) verbunden ist, wobei bei oder zur Ausbildung des Turms (11) das eine Wandteil (21) wenigstens eine Querbohrung (24) aufweist, wobei die Querbohrung (24) eine radiale Bohrung ist und die Querbohrung (24) von einem Querbolzen (25) durchsetzt ist,
**dadurch gekennzeichnet, dass**
das eine Wandteil (21) stirnseitig oder auf Stoß an das zweite Wandteil (41) angrenzt und/oder angeordnet ist und das Wandteil (21) mittels eines am Querbolzen (25) angreifenden Spannelements (26) mit dem angrenzenden zweiten Wandteil (41) verspannt ist und/oder das eine Wandteil (21) stirnseitig oder auf Stoß an den Grundkörper (23) angrenzt und/oder angeordnet ist und das eine Wandteil (21) mittels eines am Querbolzen (25) angreifenden Spannelements (26) mit dem Grundkörper (23) verspannt ist.

2. Turm (11) nach Anspruch 1, **dadurch gekennzeichnet, dass** mehrere Querbohrungen (24) im Randbereich des Wandteils (21) ausgebildet sind, der an das zweite Wandteil (41) oder an den Grundkörper (41) angrenzt, wobei insbesondere mehrere Querbohrungen (24) in vorbestimmten unterschiedlichen Abständen zum Rand des Wandteils (21) ausgebildet sind.

3. Turm (11) nach Anspruch 1 oder 2, **dadurch gekennzeichnet, dass** die Querbolzen (25) beidseits des Wandteils Bohrungen oder Durchgangslöcher zur Aufnahme von Spannelementen (26) haben.

4. Turm (11) nach einem der Ansprüche 1 bis 3, **dadurch gekennzeichnet, dass** die Querbolzen (24) im Querschnitt rund oder oval ausgebildet sind.

5. Turm (11) nach einem der Ansprüche 1 bis 4, **dadurch gekennzeichnet, dass** der Verbindungsbereich des Wandteils (21) mit dem zweiten Wandteil (41) wenigstens teilweise radial, insbesondere im Wesentlichen horizontal, umlaufend oder wenigstens teilweise vertikal, vorzugsweise im Wesentlichen vertikal, verlaufend ausgebildet ist oder der Verbindungsbereich des Wandteils (21) mit dem Grundkörper (23) wenigstens teilweise radial, vorzugsweise im Wesentlichen horizontal, umlaufend ausgebildet ist.

6. Turm (11) nach einem der Ansprüche 1 bis 5, **dadurch gekennzeichnet, dass** zwischen dem Wandteil (21) und dem zweiten Wandteil (41) wenigstens ein Zwischenstück (51) angeordnet ist.

7. Turm (11) nach Anspruch 6, **dadurch gekennzeichnet, dass** das Zwischenstück (51) im Querschnitt L-förmig oder T-förmig oder U-förmig oder S-förmig oder Z-förmig oder Y-förmig oder H-förmig ausgebildet ist und/oder dass das Zwischenstück (51) an wenigstens einem Wandteil (41) fixiert ist.

8. Turm (11) nach einem der Ansprüche 6 oder 7, **dadurch gekennzeichnet, dass** das Zwischenstück (51) auf wenigstens einer Seite einen trichterförmigen Öffnungsbereich aufweist.

9. Turm (11) nach einem der Ansprüche 1 bis 8, **dadurch gekennzeichnet, dass** das Wandteil (21) im Bereich der Querbohrung (24) oder der Bohrungen (24) mit einer Dickung ausgebildet ist.

10. Turm (11) nach einem der Ansprüche 1 bis 9, **dadurch gekennzeichnet, dass** der Turm (11) wenigstens einen Rohrturmabschnitt mit wenigstens zwei miteinander verbundenen Wandteilen (21, 41) aufweist.

11. Turm (11) nach einem der Ansprüche 1 bis 10, **dadurch gekennzeichnet, dass** das Wandteil (21) auf einen Flansch (22), insbesondere T-Flansch (22) eines Fundamentkörpers (23), oder auf einen Ankerkorb, insbesondere eines Fundamentkörpers (23), aufgesetzt ist.

12. Verfahren zum Errichten eines Turms (11) einer Windenergieanlage, wobei der Turm (11) dadurch ausgebildet wird, dass wenigstens ein Wandteil (21) des Turms mit einem zweiten angrenzenden Wandteil (41) verbunden wird oder das eine Wandteil (21) auf einem Grundkörper (23) angeordnet wird, wobei das Wandteil (21) mit dem Grundkörper (23) verbunden wird, und bei oder zur Ausbildung des Turms (11) das eine Wandteil (21) wenigstens eine Querbohrung (24) aufweist, wobei die Querbohrung eine radiale Bohrung ist und die Querbohrung (24) von einem Querbolzen (25) durchsetzt ist,
**dadurch gekennzeichnet, dass**
das eine Wandteil (21) stirnseitig oder auf Stoß an das zweite Wandteil (41) angrenzt und/oder angeordnet ist und das eine Wandteil (21) mittels eines am Querbolzen (25) angreifenden Spannelements (26) mit dem angrenzenden zweiten Wandteil (41) verspannt wird
und/oder das eine Wandteil (21) stirnseitig oder auf Stoß an den Grundkörper (23) angrenzt und/oder angeordnet ist und das eine Wandteil (21) mittels eines am Querbolzen (25) angreifenden Spannelements (26) mit dem Grundkörper (23) verspannt wird.

13. Verfahren nach Anspruch 12, **dadurch gekennzeichnet, dass** die Spannelemente (23) für den oder die Querbolzen (25) beidseits des Wandteils (21) synchronisiert vorgespannt werden.

14. Verfahren nach Anspruch 12 oder 13, **dadurch gekennzeichnet, dass** der Turm (11) nach einem der Ansprüche 1 bis 11 ausgebildet wird.

15. Verwendung eines Wandteils (21, 41) zur Ausbildung eines Turms (11) einer Windenergieanlage, wobei der Turm (11) nach einem der Ansprüche 1 bis 11 ausgebildet ist.

## Claims

1. A tower (11) of a wind turbine with at least one wall part (21), wherein the one wall part (21) is connected to a second, bordering wall part (41), or the one wall part (21) is arranged on a main body (23), wherein the wall part (21) is connected to the main body (23), wherein the one wall part (21) has at least one transverse borehole (24) during or for forming the tower (11), wherein the transverse borehole (24) is a radial borehole, and the transverse borehole (24) is penetrated by a transverse bolt (25), **characterized in that**:
the one wall part (21) borders and/or is arranged at the face or to abut the second wall part (41), and the wall part (21) is clamped to the bordering second wall part (41) by means of a clamping element (26) engaging with the transverse bolt (25)
and/or the one wall part (21) borders and/or is arranged at the face or to abut the main body (23), and the one wall part (21) is clamped to the main body (23) by means of a clamping element (26) engaging with the transverse bolt (25).

2. The tower (11) according to claim 1, **characterized in that** a plurality of transverse boreholes (24) are formed in the edge region of the wall part (21) that borders the second wall part (41) or the main body (41), wherein in particular a plurality of transverse boreholes (24) are formed at predetermined, different distances from the edge of the wall part (21).

3. The tower (11) according to claim 1 or 2, **characterized in that** the transverse bolts (25) have boreholes or through holes on both sides of the wall part to accommodate clamping elements (26).

4. The tower (11) according to one of claims 1 to 3, **characterized in that** the transverse bolts (24) are formed with a round or oval cross-section.

5. The tower (11) according to one of claims 1 to 4, **characterized in that** the connecting region between the wall part (21) and the second wall part (41) is formed to be at least partially radially, in particular substantially horizontally circumferential, or at least to run partially vertically, preferably substantially vertical, or the connecting region between the wall part (21) and the main body (23) is formed to be at least partially radially, preferably substantially horizontally circumferential.

6. The tower (11) according to one of claims 1 to 5, **characterized in that** at least one intermediate piece (51) is arranged between the wall part (21) and the second wall part (41).

7. The tower (11) according to claim 6, **characterized in that** the intermediate piece (51) is formed to have an L-shaped, or T-shaped, or U-shaped, or S-shaped, or Z-shaped, or Y-shaped, or H-shaped cross-section, and/or that the intermediate piece (51) is affixed to at least one wall part (41).

8. The tower (11) according to one of claims 6 or 7, **characterized in that** the intermediate piece (51) has a funnel-shaped opening region in at least one side.

9. The tower (11) according to one of claims 1 to 8, **characterized in that** the wall part (21) is formed with a thickening in the region of the transverse borehole (24) or the boreholes (24).

10. The tower (11) according to one of claims 1 to 9, **characterized in that** the tower (11) has at least one tubular tower section with at least two wall parts (21, 41) that are connected to each other.

11. The tower (11) according to one of claims 1 to 10, **characterized in that** the wall part (21) is mounted on a flange (22), in particular a T-flange (22) of a foundation body (23), or on an anchor cage, in particular of a foundation body (23).

12. A method to erect a tower (11) of a wind turbine, wherein the tower (11) is formed such that at least one wall part (21) of the tower is connected to a second, bordering wall part (41), or the one wall part (21) is arranged on a main body (23), wherein the wall part (21) is connected to the main body (23), and has at least one transverse borehole (24) during or for forming the tower (11), wherein the transverse borehole is a radial borehole, and the transverse borehole (24) is penetrated by a transverse bolt (25), **characterized in that**:
the one wall part (21) borders and/or is arranged at the face or to abut the second wall part (41), and the one wall part (21) is clamped to the bordering second wall part (41) by means of a clamping element (26) engaging with the transverse bolt (25)
and/or the one wall part (21) borders and/or is arranged at the face or to abut the main body (23), and the one wall part (21) is clamped to the main body (23) by means of a clamping element (26) engaging with the transverse bolt (25).

13. The method according to claim 12, **characterized in that** the clamping elements (23) for the transverse bolt(s) (25) are preclamped in sync on both sides of the wall part (21).

14. The method according to claim 12 or 13, **characterized in that** the tower (11) is formed according to one of claims 1 to 11.

15. A use of a wall part (21, 41) to form a tower (11) of a wind turbine, wherein the tower (11) is formed according to one of claims 1 to 11.

## Revendications

1. Tour (11) d'une installation d'énergie éolienne comportant au moins une partie de paroi (21), cette partie de paroi (21) étant reliée à une deuxième partie adjacente de paroi (41) ou cette partie de paroi (21) étant disposée sur un corps de base (23), la partie de paroi (21) étant reliée au corps de base (23), une partie de paroi (21) comportant, pour la constitution de la tour (11), au moins un perçage transversal (24), ce perçage transversal (24) étant un perçage radial et ce perçage transversal (24) étant traversé par une broche transversale (25),
**caractérisé en ce que** :
une première partie de paroi (21) est adjacente à la deuxième partie de paroi (41) et/ou est disposée bout-à-bout vis-à-vis de celle-ci, et la première la partie de paroi (21) est maintenue vis-à-vis de la deuxième partie de paroi (41) adjacente au moyen d'un élément de serrage (26) agissant sur la broche transversale (25),
et/ou **en ce que** la première partie de paroi (21) est adjacente au corps de base (23) et/ou est disposée bout-à-bout vis-à-vis de celui-ci, et la première la partie de paroi (21) est maintenue vis-à-vis du corps de base (23) au moyen d'un élément de serrage (26) agissant sur la broche transversale (25).

2. Tour (11) selon la revendication 1, **caractérisée en ce que** plusieurs perçages transversaux (24) sont aménagés dans la zone de bordure de la partie de paroi (21) adjacente à la deuxième partie de paroi (41) ou au corps de base (23), en particulier plusieurs perçages transversaux (24) sont aménagés à des intervalles différents prédéterminés par rapport à la bordure de la partie de paroi (21).

3. Tour (11) selon l'une quelconque des revendications 1 ou 2, **caractérisée en ce que** la broche transversale (25) comporte des perçages ou des trous traversants pour la réception d'éléments de serrages (26) sur les deux côtés de la partie de paroi.

4. Tour (11) selon l'une quelconque des revendications 1 à 3, **caractérisée en ce que** les broches transversales (24) ont des formes rondes ou ovales en section transversale.

5. Tour (11) selon l'une quelconque des revendications 1 à 4, **caractérisée en ce que** la zone de raccordement de la partie de paroi (21) avec la deuxième partie de paroi (41) est formée circonférentiellement au moins partiellement de façon radiale, en particulier sensiblement de façon horizontale, ou au moins partiellement de façon verticale, de préférence est formée de façon sensiblement verticale, ou la zone de raccordement de la partie de paroi (21) avec le corps de base (23) est formée circonférentiellement au moins partiellement de façon radiale, de préférence sensiblement horizontale.

6. Tour (11) selon l'une quelconque des revendications 1 à 5, **caractérisée en ce qu'**au moins une pièce intercalaire (51) est disposée entre la partie de paroi (21) et la deuxième partie de paroi (41).

7. Tour (11) selon la revendication 6, **caractérisée en ce que** la pièce intercalaire (51) a une section transversale en forme de L ou en forme de T ou en forme de U ou en forme de S ou en forme de Z ou en forme d'Y ou en forme de H et/ou en ce que la pièce intercalaire (51) est fixée à au moins une partie de paroi (41).

8. Tour (11) selon l'une quelconque des revendications 6 ou 7, **caractérisée en ce que** la pièce intercalaire (51) présente sur au moins un côté, une zone d'ouverture en forme d'entonnoir.

9. Tour (11) selon l'une quelconque des revendications 1 à 8, **caractérisée en ce que** la partie de paroi (21) est formée avec un épaississement dans la zone du perçage transversal (24) ou des perçages (24).

10. Tour (11) selon l'une quelconque des revendications 1 à 9, **caractérisée en ce que** la tour (11) présente au moins une section de tour tubulaire avec au moins deux parties de paroi (21, 41) reliées entre elles.

11. Tour (11) selon l'une quelconque des revendications 1 à 10, **caractérisée en ce que** la partie de paroi (21) est placée sur une bride (22), en particulier sur une bride (22) en T d'un corps de base (23), ou sur un panier d'ancrage, en particulier d'un corps de base (23).

12. Procédé pour ériger une tour (11) d'une installation d'énergie éolienne, la tour (11) étant formée de telle manière qu'au moins une partie de paroi (21) de la tour est raccordée à une deuxième partie de paroi (41) adjacente ou qu'une partie de paroi (21) est disposée sur un corps de base (23), la partie de paroi (21) étant raccordée au corps de base (23), et, pour la formation de la tour (11), l'une des parties de paroi (21) présente au moins un perçage transversal (24), ce perçage transversal étant un perçage radial et ce perçage transversal (24) contient une broche transversale (25) passant à travers lui,
**caractérisé en ce que**
la première partie de paroi (21) est adjacente à la deuxième partie de paroi (41) et/ou est disposée bout-à-bout vis-à-vis de celle-ci, et la première la partie de paroi (21) est maintenue vis-à-vis de la deuxième partie de paroi (41) adjacente au moyen d'un élément de serrage (26) agissant sur la broche transversale (25),
et/ou **en ce que** la première partie de paroi (21) est adjacente au corps de base (23) et/ou est disposée bout-à-bout vis-à-vis de celui-ci, et la première la partie de paroi (21) est maintenue vis-à-vis du corps de base (23) au moyen d'un élément de serrage (26) agissant sur la broche transversale (25).

13. Procédé selon la revendication 12, **caractérisé en ce que** les éléments de serrage (23) sont précontraints de manière synchronisée pour la ou les broches transversales (25) des deux côtés de la partie de paroi (21).

14. Procédé selon l'une des revendications 12 ou 13, **caractérisé en ce que** la tour (11) est formée selon l'une des revendications 1 à 11.

15. Utilisation d'une partie de paroi (21, 41) pour la formation d'une tour (11) d'une installation d'énergie éolienne, la tour (11) étant formée selon les revendications 1 à 11.
